# EUROPEAN PATENT SPECIFICATION

(11) **EP 1 423 771 B1**
(45) Date of publication and mention of the grant of the patent: **15.04.2009**
(21) Application number: 02765167.8
(22) Date of filing: 29.08.2002
(51) Int. Cl.: G06F 21/00

(54) **METHOD TO PROTECT SOFTWARE AGAINST UNAUTHORIZED USE**
VERFAHREN ZUM SCHUTZ VON SOFTWARE VOR UNAUTORISIERTER VERWENDUNG
PROCEDE POUR PROTEGER UN LOGICIEL CONTRE L'UTILISATION NON AUTORISEE

(30) Priority: 04.09.2001 US 944405
(43) Date of publication of application: 02.06.2004
(73) Proprietor: Nokia Corporation, 02150 Espoo (FI)
(72) Inventor: HOLOPAINEN, Yrjö, DE-44793 Bochum (DE)
(74) Representative: Becker Kurig Straus
(86) International application number: PCT/IB2002/003491
(87) International publication number: WO 2003/021403

(56) References cited:
- EP-A- 0 707 270
- EP-A- 1 076 279
- WO-A-02/52853
- WO-A-99/19784
- US-A- 4 593 353
- US-A- 4 685 055
- US-A- 5 199 066
- US-A- 5 754 761
- US-B1- 6 243 468
- BRUCE SCHNEIER: "Applied Cryptography"

## Description

### BACKGROUND OF THE INVENTION

### 1. Field of the Invention

The present invention relates generally to a method for preventing the unauthorized use of software programs, and in particular, a method of preventing the unauthorized use of software programs in connection with hardware devices.

### 2. Description of Related Art

The unauthorized use of software is a common problem for software developers and distributors. The use of personal computers at home and in the office has become widespread in the last decade. Software and hardware products provide a high level of functionality and their use is growing. Particularly, the use of personal computers at home is still rising and will extend further on. The more complex the software functionality and the greater the effort of development of the software the more important is the protection of software against unauthorized use. Although unauthorized copying of computer software is a violation of the law, the widespread availability of pirated software and limited enforcement capabilities have further enlarged the extension of software piracy.

Furthermore, software is distributed in growing number in combination with special hardware devices. This bounding of hardware devices with corresponding software utilities is often done to increase the value of hardware devices and to separate the bundled product from comparable products of competitors. Proprietary hardware devices with corresponding software are not subject to the problem of using hardware devices with software utilities of another manufacturer. But more and more hardware devices use standard interfaces to operate in combination with different software. Therefore, it is important for manufacturers to prevent the unauthorized use of software, which is developed to be distributed only in combination with the corresponding hardware devices. A further consideration of limiting the functionality of software with certain hardware devices can be a suitable means to tie a customer who purchased a hardware device to the same manufacturer. For example, the customer has to purchase the corresponding software product of the same manufacturer in order to gain access to all functions and options of the hardware. Therefore, the manufacturer is capable to calculate a mixed cost for the hardware and software products dependent upon the development expense.

Current methods of preventing the unauthorized use of software are not effective enough or a nuisance. The use of license keys is not effective as can be seen from the high number of available tools to remove license key inquiries or the huge number of published unauthorized license keys in the internet. Methods to generate license keys can often be determined fast. Also, it is not possible to monitor the usage of the software and in particular which use should only be authorized in combination with particular hardware devices.

An effective but uncomfortable method to protect the use of software is the use of hardware keys, called "dongles". These external devices execute a certain algorithm to produce a code which the computer receives and affords access to the software code if the code is correct. While the use of hardware keys is an effective way to reduce software piracy, additional hardware keys raise the problem of connecting them to the computer which executes the software. Standardized input/output ports are available and technically sufficient but conflicts with other connected hardware occurs often. Hardware keys are also costly to produce and the combination with software is rather questionable. Hence, effective hardware keys are limited economically to software applications of high value.

The problem associated with current protection methods of software is that there is no method available which combines the authorization process of software use with the check on certain hardware devices accessed by the software.

From US-A-4 593 353 it is already known a software protection method and apparatus for limiting program execution to only an authorized data processing system. The protection against unauthorized use is obtained by the means of a pseudorandom number generator (PRN GEN), first and second authorization codes and a proprietary program.

From US-A-5 754 761 there is already known a method for preventing unauthorized use of software accessing one specific hardware module comprising a unique hardware identification sequence, wherein said software comprises a license key for being executed, wherein said license key comprises a predetermined encrypted hardware identification sequence, said method comprising reading out said hardware identification sequence, retrieving said identification sequence and comparing said read out identification sequence of said hardware module with said decrypted identification sequence of said license key, and permitting execution of said software if both said sequences match.

EP 1076279 A1 discloses computer platforms and methods of operation in conjunction with protection of licenses by means of certified digital signatures.

EP 0707270 A2 discloses the protection of a unique hardware identifier by means of digital signatures in the context of licensing.

US 4685055 discloses authorizing methods including the certificate authority.

WO 99/19784 A1 discloses a wireless connected control device for checking license conditions.

### SUMMARY OF THE INVENTION

Therefore, there is a need for a secure and reasonable method to prevent software bound to corresponding hardware devices from unauthorized use. The method of protecting software against unauthorized use does not only secure the software use itself but also the unauthorized use of the software with comparable hardware devices of competitors. This is important in case of software which is additionally available. In order to employ the method of the present invention at least one hardware device has to comprise a unique unalterable identification sequence such as identification numbers, serial numbers or other embedded unique code sequences which can be read out by the software and enable an unambiguous identification.

This object is attained by the appended claims in accordance with the present invention.

A license key stored in the software or accessible by the software is required for executing the software. The kind of access of the software to the license key depends on the device able to execute the software. It is advantageous to store the license key in a separate file when the software is developed to be executed on common personal computers. The software reads out the unique hardware identification sequence from the associated hardware module. The license key contains also at least one hardware identification sequence. The read out sequence and the contained sequences are compared. The use of the software is permitted and execution is allowed if both sequences match. The contained hardware identification sequences are co-coded in a license key which can also contain an additional classical software license key. The additional classical software license key can contain further software related information, e.g. sequences to identify the software program, sequences to identify the manufacturer or distributor of the software program and the like. The comparison of the contained hardware identification sequence and the read out identification sequence by the software allows to select between different authorization conditions. Therefore, it is possible to allow the use of the software by a certain sequence of identified hardware devices comprising the correct hardware identification sequence. The software license key need not only contain a single hardware identification sequence but a variety of sequences could be contained wherein only one or some contained sequences have to match. The hardware devices have not to be connected electrically to the computer or a comparable device able to execute the software since wireless connections are getting more and more important especially also for home use.

The wording "co-coded" shall be understood as broad as possible and particularly in an equivalent interpretation covering equivalent terms, wherein the wording "co-coding" can be assumed to be an additional coding in, a composed coding with, a coding of and the like. For example, the license key may be a one-piece sequence or may be composed of several dependent or independent sequences comprised in one or several data records being associated with one or several storage places. Co-coding shall further encompass that the sequences may be coded (dependently or independently, i.e. based on the same coding method or based on a different coding method or the same coding method in combination with another coding parameter) with respect to their function which implies that a respective sequence or subsequence may be extracted by decoding one or a part of the one or several sequences representing the license key.

According to an embodiment of the invention, the reading out operation of the hardware identification sequence from the hardware module is operated via an interface which is adapted to interface communication between the at least one hardware module and the processing device, which is an apparatus for executing and running the software to be protected by the aforementioned method, respectively.

Moreover according a further embodiment, the reading out operation is operated via an interface employing a wired or wireless communication connection for interconnecting the at least one hardware module and the above mentioned software executing and running processing device, respectively.

Preferably, the hardware numbers which are contained in the license key are encrypted. There are several methods to encrypt the desired hardware identification sequences and co-code them in the required license key.

Conveniently, the encrypted hardware identification sequences are decrypted by using a secret key. This secret key is implemented and coded in the software code, respectively. The manufacturer or distributor of the software has to know the hardware identification sequences of the corresponding hardware devices which should be contained in the license key. The same secret key is used for encrypting this sequence and for decrypting. A comparable method is to use a secret algorithm instead of a secret key. The same algorithm is used to encrypt and may also be used to decrypt the hardware identification sequences contained in the license key. Therefore, this algorithm has to be implemented or coded in the software code, respectively. These two methods offer a relative protection against unauthorized use of the software. Moreover, these methods are implemented economically in software utilities of low costs.

More preferably, a public key encryption method is used to generate the license key and to retrieve the hardware identification sequences during the software execution. A public key encryption method requires two different keys, the secret key and the public key. The secret key is used to encrypt data which can only be decrypted using the public key. Contrary to the above described encryption methods the encryption key or method can not be extracted out of the software code. The secret key has not been implemented in the distributed software since the public key is sufficient to decrypt the contained hardware identification sequences. The secret key has only to be known to the responsible license key generating authority. The public key can be implemented in the software code but also submitted in combination with the license key or obtained via a web page or the like.

Conveniently, a freely obtainable public key and information about the internal format of the license key would enable the possibility of constructing a "hacked" key for certain unauthorized hardware devices since the software program is not able to distinguish between a legal public key of an authorized party and a public key of an unauthorized source. Therefore, the coding of the public key is advantageous.

Additionally, to prevent the simultaneous exchange of public key and license key, which would allow the unauthorized use of the software, the public key can be signed by a third authority. This signed public key is called generally a certificate. However, the signing of a key is based again on a public key encryption method described above. A corresponding pair of keys is used for encryption and decryption. The corresponding pair of keys is provided by a third party key authority often specialized for key providing. The public key of the manufacturer or distributor of the software is encrypted by the secret key of the third party key authority. In order to gain the public key which is used to decrypt the hardware identification sequences contained in the license key the corresponding public key of the third party key authority is applied to the certificate in order to decrypt the certificate. The staggered encryption by applying two secret keys each known to different independent key authorities makes it more difficult to overcome the protection of the software in favor of unauthorized use.

In case of the above described usage of a certificate distributed by the manufacturer or distributor of the software and a public key of a third key authority it is possible to distribute both the certificate and the third party public key via freely accessible sources. Possible sources can be for example a WEB server of the manufacturer or distributor providing the necessary certificate via WEB pages and download availability and providing additionally a hyperlink to WEB pages of the WEB server of the third party key authority in order to offer a complete set of certificate and public key to the vendor.

Preferably, the software program is bond to at least one network interface module. Network interface modules comprise a unique identification sequence of worldwide validity known as medium access control layer (MAC) address. The MAC address is perfectly suited for use as unique identification sequence. More preferably, the software program is bond to at least one Bluetooth module which comprises a worldwide unique Bluetooth address.

According to another embodiment of the invention, a software tool for preventing unauthorized use of software is provided. The software tool comprises program portions for carrying out the operations of the aforementioned methods when the software tool is implemented in a computer program or in a code section, respectively, and/or executed.

According to another embodiment of the invention, there is provided a computer program for preventing unauthorized use of software. The computer program comprises program code portions for carrying out the operations of the aforementioned methods when the program is executed on a processing device, a computer or a network device.

According to another embodiment of the invention, a computer program product is provided which comprises program code portions stored on a computer readable medium for carrying out the aforementioned methods when said program product is executed on a processing device, a computer or a network device.

According to another embodiment of the invention, a processing device allowing for preventing unauthorized use of software is provided. Therefore, the processing device comprises or is loaded with the software to be protected against this kind of misuse, wherein the software is executed or run on the processing device and comprises a license key required for executing and running the software, respectively. Further, the device comprises an interface, a component for reading out, a component for retrieving, a component for comparing and a component for permitting. The component for reading out allows for reading out a hardware identification sequence comprised by at least one hardware module which contains this hardware identification sequence allowing to identify the at least one hardware module and more particular identifying uniquely the at least one hardware module. The component for reading out further involves the interface for reading out the hardware identification sequence by employing the interface for interfacing the data communication in-between the processing device and the at least one hardware module. The component for retrieving allows for obtaining a hardware identification sequence stored in the license key and the component for comparing is adapted to compare both the read-out and retrieved hardware identification sequences in order to determine if the software is authorized for use. The component for permitting the execution of the software enables the functionality of the software. In case of matching of the read-out and retrieved hardware identification sequences.

The software might be fully enabled if the read out and retrieved hardware identifications match and might be only partly enabled if the read out and retrieved hardware identification do not match.

According to another embodiment of the invention, the aforementioned interface is based on a wired or wireless data communication interface allowing for data communication between the at least one hardware module and the processing device executing and running the software to be protected, respectively.

According to another embodiment of the invention, the processing device further includes a component for decrypting adapted and capable to decrypt the hardware identification sequence contained in the license key and being encrypted.

According to another embodiment of the invention, the component for decrypting is adapted to perform a decryption process being based on a public key encryption method. The public key encryption method involving a first public and a first secret key is mentioned above and described in detail referring to an embodiment of the method according to the invention. According to another embodiment of the invention, the component for decrypting is adapted to perform a staggered decryption process including additionally an encrypted first public key. This staggered public key encryption method involving a first public, a first secret key, a second public and a second secret key is mentioned above and described in detail referring to an embodiment of the method according to the invention. The first and second publics key, either encrypted or not, may be freely accessible.

According to another embodiment of the invention, a system allowing for preventing unauthorized use of software is provided, including a processing device and at least one hardware module.

Correspondingly, the processing device comprises or is loaded with the software to be protected against this kind of misuse, wherein the software is executed or run on the processing device and comprises a license key required for executing and running the software, respectively. Further, the device comprises an interface, a component for reading out, a component for retrieving, a component for comparing and a component for permitting. The component for reading out allows for reading out a hardware identification sequence comprised by at least one hardware module which contains this hardware identification sequence allowing to identify the at least one hardware module and more particular identifying uniquely the at least one hardware module. The component for reading out further involves the interface for reading out the hardware identification sequence by employing the interface for interfacing the data communication in-between the processing device and the at least one hardware module. The component for retrieving allows for obtaining a hardware identification sequence stored in the license key and the component for comparing is adapted to compare both the read-out and retrieved hardware identification sequences in order to determine if the software is usage is authorized. The component for permitting operation of the software enables the functionality of the software in case of matching read-out and retrieved hardware identification sequences. The software might be fully enabled if the read out and retrieved hardware identifications match and might be only partly enabled if the read out and retrieved hardware identification do not match.

Further, the at least one hardware module comprises therefore the hardware identification sequence to be read out and a corresponding interface allowing for the reading out of the hardware module by the processing device executing and running the software, respectively.

According to another embodiment of the invention, the aforementioned interfaces are based on a wired or wireless data communication interface allowing for data communication between the at least one hardware module and the processing device executing and running the software to be protected, respectively.

According to another embodiment of the invention, the processing device further includes a component for decrypting which is adapted and capable to decrypt the hardware identification sequence contained in the license key and being encrypted.

According to another embodiment of the invention, the component for decrypting is adapted to perform a decryption process being based on a public key encryption method. The public key encryption method involving a first public and a first secret key is mentioned above and described in detail referring to an embodiment of the method according to the invention.

According to another embodiment of the invention, the component for decrypting is adapted to perform a staggered decryption process including additionally an encrypted first public key. This staggered public key encryption method involving a first public, a first secret key, a second public and a second secret key is mentioned above and described in detail referring to an embodiment of the method according to the invention.

### BRIEF DESCRIPTION OF THE DRAWINGS

Throughout the following, reference numerals will be used in the drawings, and like reference numerals will be used throughout the figures in the description to describe corresponding parts of embodiments of the invention.
- Fig. 1: is a flow chart illustrating the method steps performed to activate the protected software the first time,
- Fig. 2: is a flow chart illustrating the method steps performed to activate repeatedly the protected software after the first activation,
- Fig. 3: shows a possible arrangement of two personal computers each equipped with a Bluetooth network interface as a further example of a hardware arrangement,
- Fig. 4: shows a possible arrangement of a mobile terminal and a mobile phone each equipped with a Bluetooth network interface as a further example of a hardware arrangement,
- Fig. 5: shows a further embodiment involving a controller unit like a mobile phone or a personal computer both equipped with a Bluetooth network interface to control a home electronic device like DVD-Player, VCR-Recorder,
- Fig. 6: illustrates an arrangement of a mobile phone inter-operating with a terminal device with respect to an embodiment of the invention, and
- Fig. 7: illustrates an arrangement of a mobile phone having an external attached camera module according to an embodiment of the invention.

### DETAILED DESCRIPTION OF THE PREFERRED EMBODIMENT

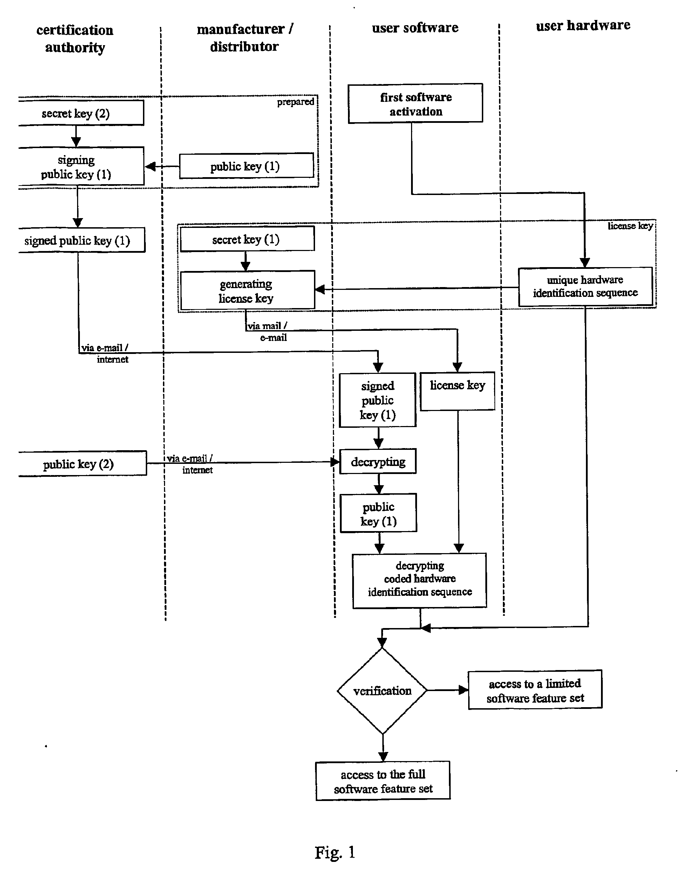

Fig. 1 shows a flow chart. The flow chart illustrates an embodiment according to the method of the present invention. The shown embodiment applies the above described public key encryption method in combination with a signed public key and certificate, respectively.

A typical exemplary scenario shall be described below to enlighten the virtue of the software protection method against unauthorized use. Hardware devices and the corresponding software can be purchased via the internet using a web shop of the manufacturer or distributor or via a classical shop. If the purchase is performed via the internet contact information like mail address or e-mail address are submitted to the vendor. The hardware devices and the corresponding software are put together and sent to the purchaser. The respective hardware identification numbers can be obtained for example by the serial number of the hardware products. The unique hardware identification numbers and serial numbers are linked by a database system. To allow the use of the software also the license key has to be submitted to the purchaser. The hardware identification numbers are encrypted using a secret key according to a public key encryption method. In order to ensure a certain security of the secret key the encryption of the hardware identification numbers and the coding of the encrypted numbers in the license key should be performed by a single key authority to avoid a wide distribution of the secret key. The generated license key is submitted using preferably another way of submission. It is also possible that the license key has to be requested by the user. The user submits for example the serial number of the hardware devices in his property or the unique hardware identification numbers determined by a special software tool and a contact address to the key authority. The key authority has to be able to check the hardware numbers to ensure that the hardware device is authorized to be used in combination with the software. The user is now in possession of the hardware devices, the corresponding software and a personal license key.

A public key according to the secret key has also to be provided. Coding of the public key would be the simplest but also an unsafe way of providing. According to the currently preferred embodiment the public key is provided as a certificate or signed public key. The signed public key involves a third party key authority which encrypts the public key according to the secret key used for encrypting the hardware identification numbers contained in the license key. Both the signed public key and the public key of the third party key authority can be submitted to the user via e-mail or can be accessed by the user using the internet.

The software can now decrypt the hardware identification numbers of the license key in a two step decryption. In a first decryption step the signed public key or certificate, respectively, is decrypted using the public key of the third party key authority. This decryption results in the public key of the manufacturer or distributor. The following second decryption step involving the gained public key and the license key results in revelation of the hardware numbers contained in the license key. The contained hardware numbers are now compared with the hardware identification numbers read out by the software of the accessible hardware devices. If the numbers match access to the software and its execution is permitted to the user. In the other case it is for example possible to permit access to the software with limited functionality.

Due to the additional encryption of the public key used for decrypting the license key data the manipulation of the software and thereupon the unauthorized use of the software is made more difficult in comparison to using a coded public key for decryption. The certificate ensures that only the public key of the manufacturer or distributor is a legal public key. Additionally, if the certificate and the corresponding public key of the third party key authority are submitted in any way parallel to the submission of the license key, the exchange of the keys is easier and once compromised keys can be exchanged against new secure ones.

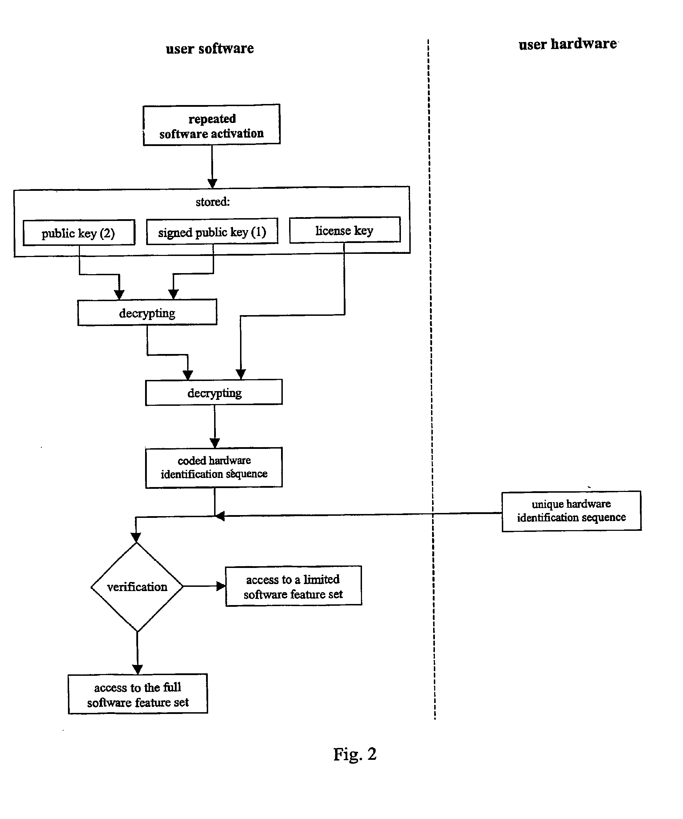

Fig. 2 is a flow chart illustrating the method steps performed to activate repeatedly the protected software after the first activation. In the present embodiment according to Fig. 2 the public key of the third party authority or certificate, respectively, the public key of the manufacturer or distributor and the license key are stored. Each time the software is restarted the signed public key is decrypted using the public key of the manufacturer or distributor and subsequent the contained hardware identification numbers are decrypted and extracted for the license key and compared with the accessible hardware devices in order to ensure that the authorized hardware devices are used. This proceeding ensures that the public key of the manufacturer can not be exchanged against a public key of an authorized party. Hereby, a protection against misuse of the software program is given or a short-circuiting of the software protection is made much more difficult, respectively.

Often software programs once installed on a computer system can not be copied and reinstalled on another one. In this case the protection against exchange of the public key of the manufacturer or distributor is not necessary any more. Hence, it can be sufficient to check only once the public key to ensure the origin of the public key from an authorized source. Only the decrypted certificate and the license key have to be stored which saves the execution of one decrypting process. The complete software protection is to be preferred, since the same decryption methods and algorithms are often used and the implementation of the complete staggered decryption process does not extend the software program to much.

In a final operation of the software protection method according to an embodiment of the invention the comparison or verification of the extracted hardware identification sequence (extracted from the license key by the above described means of a public key encryption method) and the read-out hardware identification key (read-out from the hardware module associated to the software processing device also performing the software protection method according to an embodiment of the invention) result in a full enabling of the software functionality in case of validity (matching) of the extracted and read-out hardware identification sequences. A full enabling of the software functionality means that a user is allowed to access and use the total functionality provided by the software.

In case of invalidity (mismatching) of the extracted and read-out hardware identification sequences according to a first embodiment, the processing of the software is blocked such that a user can not access or use any of its functionality. In case of invalidity of the extracted and read-out hardware identification sequences according to a second embodiment, the processing of the software is not blocked totally such that a user is allowed to access and use a limited number of the total software functionality. Such a partly blocking or partly releasing of software functionality is known from the shareware concept. Some shareware can be freely downloaded, installed and used wherein the use is restricted to a function limited version. For example a registration key input by a user transforms the function limited shareware version into a function unlimited shareware version.

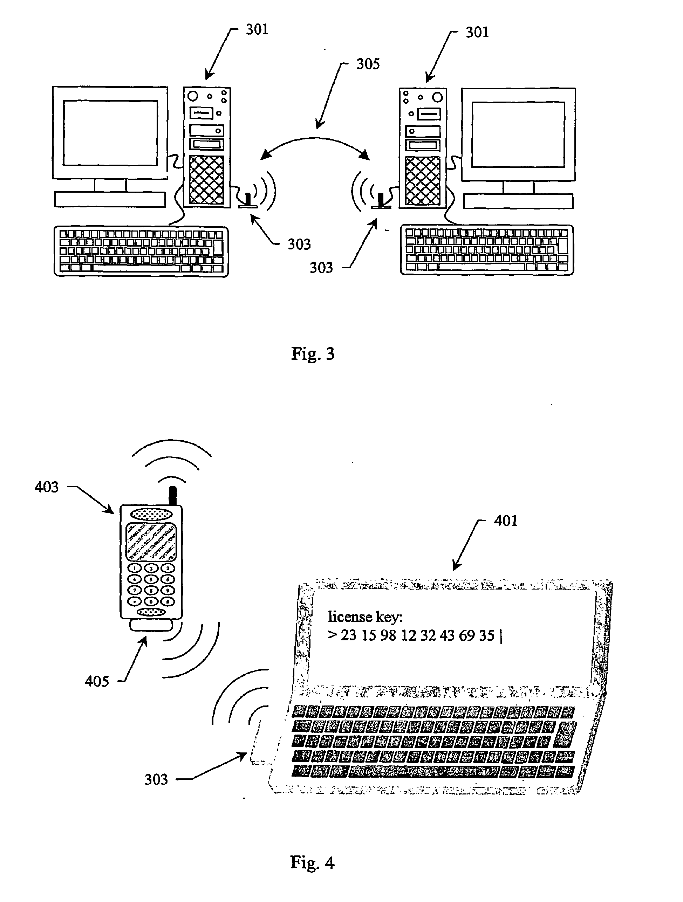

Fig. 3 shows a possible arrangement of two computers 301-each equipped with a Bluetooth network interface 303 as an example of a hardware arrangement. The both Bluetooth network interfaces 303 each comprise a unique hardware identification address. Both identification addresses can be read out by both software installed on one of the both computers 301 since Bluetooth network interfaces 303 are accessible from each other and all network interface cards have to comprise a unique hardware identification address to recognize them worldwide. Software applying the protection method according to the present invention can be installed on one of the two computers and checking if at least two Bluetooth network interfaces 303 comprising certain hardware identification address are accessible. It is even possible to co-code additional license conditions. For example, it could be coded that one of the Bluetooth network interface 303 has to be connected electrically to the computer which executes the software and the other network interface 303 is accessed via radio frequency transmission 305. Obviously, the number of verified hardware devices comprising unique hardware identification addresses can vary according to the license conditions.

Fig. 4 shows a possible arrangement of a mobile terminal 401 and a mobile phone 403 each equipped with a Bluetooth network interface 303, 405 as a further example of a hardware arrangement. This arrangement is similar to the arrangement shown in Fig. 3. A mobile phone 403 is used for linking a mobile terminal 401 to an access server to the internet. The data communication between mobile phone 403 and mobile terminal 401 is performed using Bluetooth network interfaces 303, 405. A special software is implemented on the mobile terminal 401 which use is only authorized in combination with a mobile phone 403 of a certain manufacturer. The manufacturer of the Bluetooth network interface 405 plugged on the mobile phone 403 distributes the necessary communication software which shall only be usable if this certain Bluetooth network interface 405 is connected. The software executed on the mobile terminal is protected against unauthorized use applying the method according to the present invention. The license key contains the Bluetooth hardware address of the Bluetooth network interface 405. The corresponding Bluetooth network interface 303 connected to the mobile terminal 401 is not involved in the verification process so that a Bluetooth network interface of any manufacturer can be used.

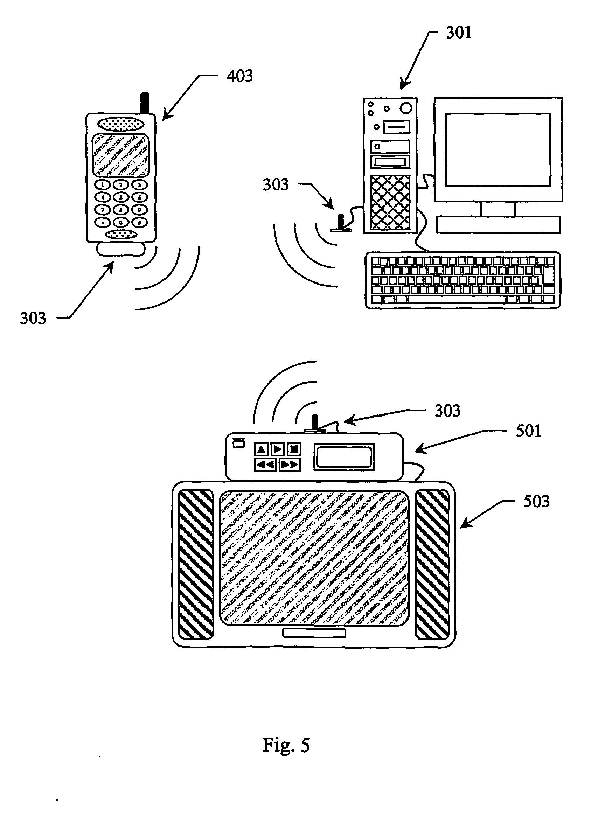

Fig. 5 shows a further embodiment involving a controller unit like a mobile phone 403 or a personal computer 301 both equipped with a Bluetooth network interface 303 to control a home electronic device 501 like digital versatile disk player (DVD), video recorder (VCR), digital video recorder (DVCR). Rising numbers of features included in home electronic devices requires just operable user interfaces. Particularly, video processing devices comprising multiple features are suitable to be equipped with interface devices for remote controlling by another terminal device, e.g. personal computer, mobile phone or the similar devices able to execute controlling software. A Bluetooth network interface can be implemented as preferred interface device. Related controlling software executed on the controlling devices has to be protected and shall only be usable in combination with the home electronic device of the certain manufacturer but executable on controlling devices of several manufacturer. Therefore, the method of the present invention is suitable to prevent unauthorized use of the software for controlling unauthorized devices of a competitor which implement the same controlling interface.

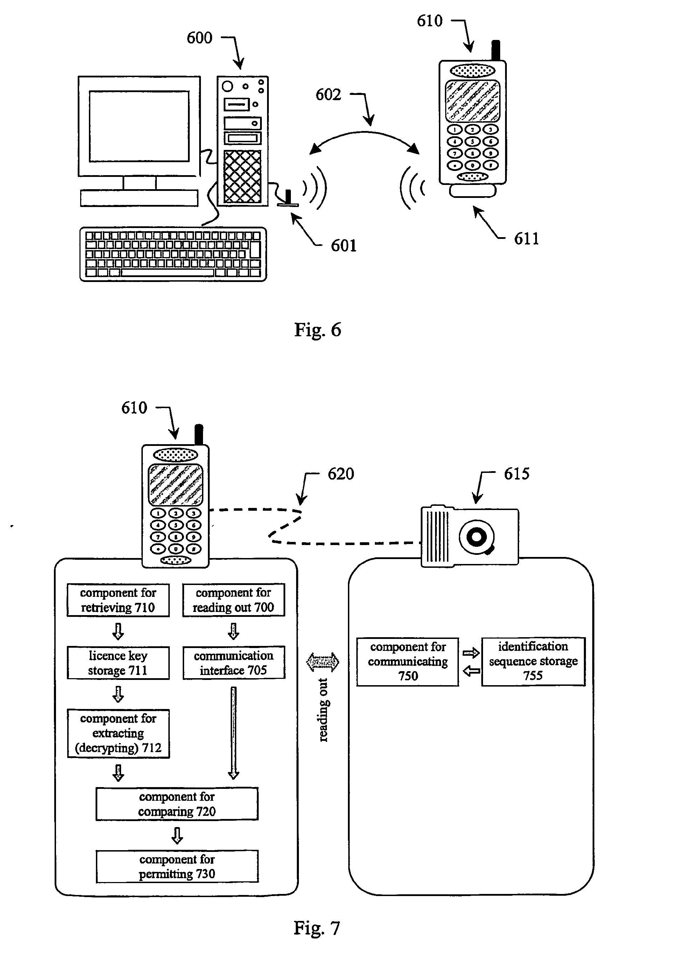

Fig. 6 illustrates an arrangement of a software executing device, herein a terminal device in the representation of a personal computer as an example of a software operating device, inter-operating with an external hardware module, herein a mobile phone, with respect to an embodiment of the invention wherein for example the inter-operating relationship between mobile phone and personal computer allows for synchronizing data in-between of them. In accordance with the aforementioned method according to an embodiment of the invention a certain software or computer program containing one or several portions of instructional code is operated on the terminal device 600. The operation of this certain software or computer program shall not be limited to a certain terminal device 600, i.e. the certain software or computer program shall be executable and be able to run on terminal devices of any similar kind which is to be understood as for example to be executable on processing devices having a certain operation system, a certain family of related central processing units and the like, respectively.

Further, the dedicated software or computer program inter-operates by communication means of the terminal device 600 executing it with the external hardware module 610, i.e. data is communicated in-between the terminal device 600 and the external hardware module 610 which is required for the operation of the dedicated software or computer program. However, the operation or use of the software shall be limited in accordance with the inventive concept described above, i.e. the unlimited operation of the software or computer program, i.e. for example the operation of all software features, shall only be possible if the inter-communication of data is performed with a particular external hardware module 610 identifiable by a unique identification sequence comprised by the external hardware module 610 and retrievable by the dedicated software or computer program.

In order to enlighten this software protection idea based on the provided inventive concept, a mobile phone herein being represented by the external hardware module allows for synchronizing data with a synchronization counterpart device. The synchronization counterpart device herein being represented by the terminal device 600 has to run a certain synchronizing software inter-operating with the mobile phone. This synchronizing software distributed by the manufacturer of the mobile phone is sold additionally and only to an owner of a mobile phone produced by the manufacturer. For example, two main concerns may be of interest for the manufacturer. Primary, the exchange of the additional synchronizing software among owners of the certain mobile phones supporting the synchronizing shall be prevented effectively. And second, the use of the additional synchronizing software shall only be operable with mobile phones produced by the manufacturer even if the software is principally able to be properly operable with mobile phones of competitors. However, the additional synchronizing software shall be operable on a large number of synchronization counterpart device.

Both aforementioned concerns referring to misuse of software by users are resolvable by implementation of an embodiment of the aforementioned and described method for preventing unauthorized use of software. The primary above addressed problem of an unauthorized exchanging software between owners of mobile phones capable to synchronize is prevented by the retrieval of a unique hardware identification sequence identifying a certain mobile phone. The synchronizing software tests on this device related hardware identification sequence and allows for using only in case of a valid hardware identification sequence. In view of example described above a suitable unique hardware identification sequence is the IMEI (international mobile equipment identity), the IMSI (international mobile subscriber identity) or the like. The second above addressed problem of an unauthorized use of software in combination with a mobile phone produced by a competitor is resolved analogously. For this, the mobile phones of one manufacturer can contain a unique hardware identification sequence identifying the manufacturer uniquely. The synchronizing software tests on this manufacturer related hardware identification sequence and allows for using it only in case of a valid hardware identification sequence. The manufacturer related hardware identification sequence may be gained for example from the IMEI (international mobile equipment identity).

The declaration of one or more valid hardware identification sequences, i.e. independent if the hardware identification sequence is device related or manufacturer related, is performed in accordance to the description of the embodiments being given with reference to Fig. 1 and Fig. 2.

The terminal device 600 and the external hardware module 610 have a common communication connection which is employed for the retrieval of the identification sequence as well as for the data communication occurring during the execution of the software or computer program. As example, Fig. 6 illustrates a Bluetooth inter-connection being based on a Bluetooth module 601 of the terminal device 600 and a corresponding Bluetooth module 611 of the external hardware module 610 via the radio frequency communication link 602. Further, the communication can be based on other wired or wireless communication connections, such as a universal serial bus (USB) connection, a serial RS-232 connection, a proprietary cable based serial or parallel connection, an infrared (IRDA) connection, a wireless local loop (WLL) connection, a wireless local area network (WLAN) connection, a proprietary low power radio frequency communication connection, wherein these given connections constitute only a selection of possible popular communication connections. The terminal device 600 and the external hardware module 610 can also be inter-connected via a data communication bus, wherein a board number of standardized and proprietary data communication buses can be employed for allowing data communication in-between the software or computer program to be protected against unauthorized use and the external hardware module.

Despite examples have been given in view of an external hardware module 610 the hardware module can be also implemented additionally into the processing device executing the software wherein the hardware module represents a supplementary hardware extension to the processing device not necessary for the operation of the processing device but offering additional functionality to the processing device.

Fig. 7 illustrates an arrangement of a mobile phone having an external attached camera module according to an embodiment of the invention. The depicted mobile phone 610 as also the illustrated camera module 615 shall represent an arrangement of a processing device operable with a dedicated software and an attached hardware module with which that dedicated software is inter-operating according to the inventive concept on which the invention is based. Herein, the mobile phone 610 comprises an imaging software for handling the camera features, i.e. recording and manipulating pictures taken by the camera module 615. The camera module 615 is a supplementary equipment of the mobile phone but the corresponding imaging software is implemented in each mobile phone 610 by default. The access to the imaging software by the user shall only be allowed in case that the camera module 615 is accessible for the imaging software which may ease the usage of the user interface of the mobile phone. The controlling of the visibility of the camera module related item of the user interface may be obtained by retrieving a hardware identification sequence analogously to any embodiment described above. According to an embodiment of the invention the mobile phone 610 and the camera module are inter-connected via an external data communication bus 620 which can be based on a fast serial bus, a fast parallel bus or for example on a bus like the multimedia card (MMC) bus.

Correspondingly, the mobile phone representing the software executing device contains at least a component for reading out 700 this hardware identification sequence from the hardware module containing this hardware identification sequence, a component for retrieving 710 at least one hardware identification sequence form the license key being stored in a suitable storage 711, a component for comparing 720 the retrieved and at least one of the stored hardware identification sequences and a component for managing 730 the permission of software execution. The component for retrieving 700 this hardware identification sequence from the hardware module can require and involve one or several communication components 705 allowing for communication with the supplementary hardware module, for example the communication components 705 are based on any of the aforementioned communication connection standards or proprietary communication solutions. The component for retrieving 710 at least one stored hardware identification sequence may require access to a license key storage 711 which can be for example a memory storing providing a dedicated storage area, a mass storage medium and the like. In case of encrypted stored hardware identification sequences corresponding components for decrypting 712 may be also implemented having access to necessary further decryption related information such as a public key.

The hardware module, for example the camera module, comprises further also at least a component for storing 755 the hardware identification sequence and a component for communicating 750 the hardware identification sequence to the software executing device on a request therefrom. The component for communicating 750 corresponds to the data communication interface of the software executing device mentioned above. The hardware identification sequence is stored for example in memory such as a read only memory (ROM) or a flash memory, a smart card such as a subscriber identification module or any other suitable hardware component capable to store an identification sequence and allowing for reading out the identification sequence via an request on the component for communicating 750 issued by the software executing device via its communication interface 705 initiated by the component for reading out 700.

By the means of the aforementioned components a method for preventing unauthorized use of software according to an embodiment of the invention is implemented into the mobile phone 610, i.e. into the imaging software contained in the mobile phone 610.

It shall be emphasized that the prevention of unauthorized use of software in accordance with the inventive concept of the present invention is in contrast to the known methods. The known methods addresses the desire to limit the use of the software to a certain dedicated processing device executing exclusively the software. The herein presented inventive concept addresses the desire not to limit the use of a certain software to a certain dedicated processing device but to limit the use of the software to the presence of a certain supplementary hardware module which is also involved in the executing of the software and extends the functionality of the processing device. The processing device on which the software itself is executed is not of any relevance such that the software may be executed and run on several processing devices but only in combination with the hardware module providing the identification sequence on which it is tested.

The forgoing description of the preferred embodiment of the invention has been presented for the purpose of illustration and description. It is not intended to be exhaustive or to limit the invention to the precise form disclosed. Many modifications and variations are possible in light of the above teaching. It is intended that the scope of the invention be limited not by this detailed description, but rather by the claims appended hereto.

The method to prevent unauthorized software use applies a unique hardware identification sequence of hardware devices accessed by the software. The identification sequence is compared with coded sequences in a special license key comprising hardware identification sequences. To protect the contained hardware identification sequences against unauthorized manipulation the sequences can be encrypted using different encryption methods according to the desired degree of protection. Accordingly, software which use is bonded to certain hardware devices can be protected effectively and reasonably by employing the method of the present invention.

## Claims

1. Method for preventing unauthorized use of software accessing at least one specific hardware module comprising a unique hardware identification sequence, wherein said software comprises a license key for being executed, wherein said license key comprises predetermined encrypted hardware identification addresses,
wherein said method is carried out on a device being equipped with a first Bluetooth network interface (303) and being wirelessly connected to said hardware module having a second Bluetooth network interface (405), wherein each Bluetooth network interface (303, 405) comprises a hardware identification address being used as said hardware identification sequence,
said method comprising:
- reading out said hardware identification addresses from both said Bluetooth network interfaces (303, 405),
- retrieving said encrypted hardware identification addresses contained in said license key,
- decrypting an encrypted first public key with the help of a second public key,
- decrypting said encrypted hardware identification addresses retrieved from said license key with the help of a first public key being part of a public key encryption method,
- comparing said read-out hardware identification addresses of said Bluetooth network interfaces (303, 405) with said decrypted hardware identification addresses of said license key, and
- permitting execution of said software if the corresponding addresses match
wherein said first public key is encrypted with the help of a public key encryption method comprising a second secret key only known to a trusted third authority and a second public key corresponding to said second secret key, wherein said encrypted first public key is encrypted with the help of said second secret key and said second public key is the only key applicable for decrypting said encrypted first public key.

2. Method according to claim 1, wherein said reading out is operable with an interface for interfacing communication with said at least one hardware module.

3. Method according to claim 2, wherein said reading out is operable with an interface being based on a wired or wireless data communication interface for interconnecting said at least one hardware module with a processing device operable with said software.

4. Method according to any one of the preceding claims, **characterized in that** said hardware identification sequence contained in said license key is encrypted by employing said public key encryption method, comprising:
- a first secret key which is only known to license key distribution authorities, wherein said first public key corresponding to said first secret key,
wherein said first secret key is used for encrypting said hardware identification sequence and wherein said first public key is the only key which allows to decrypt data encrypted by said first secret key.

5. The method according to anyone of the preceding claims, wherein at least one out of the first public key and the second public key is freely accessible.

6. The method according to anyone of the preceding claims, comprising:
- providing said license key additionally includes sequences to identify the software program and/or sequences to identify a manufacturer or distributor of the software program, and/or
- providing said hardware identification sequence of said at least one specific hardware module, which hardware identification sequence identifies a manufacturer of the hardware module.

7. Computer program for preventing unauthorized use of software, comprising program code section for carrying out the operations of any one of claims 1 to 6, when said program is run on a processing device, a computer, a user terminal or a network device.

8. A processing device for preventing unauthorized use of software, wherein said software accesses at least one specific hardware module comprising a unique hardware identification sequence, wherein said software is operable with said processing device and comprises a license key for being executed, said license key comprising predetermined encrypted hardware identification addresses,
said device comprising:
- a first Bluetooth network interface (303) for wireless interconnecting said processing device to a second Bluetooth network interface (405), wherein each Bluetooth network interface (303, 405) comprises a hardware identification address being used as said hardware identification sequence,
- a component for reading out said hardware identification addresses from both said Bluetooth network interfaces (303; 405),
- a component for retrieving said encrypted hardware identification addresses contained in said license key,
- a component for decrypting an encrypted first public key with the help of a second public key,
- a component for decrypting said hardware identification addresses retrieved from said license key with the help of a first public key being part of a public key encryption method,
- a component for comparing said read-out hardware identification addresses of said Bluetooth network interfaces (303, 405) with said decrypted hardware identification addresses of the license key, and
- a component for permitting execution of said software if both sequences match,
wherein said first public key is encrypted with the help of a public key encryption method comprising a second secret key only known to a trusted third authority and a second public key corresponding to said second secret key, wherein said encrypted first public key is encrypted with the help of said second secret key and said second public key is the only key applicable for decrypting said encrypted first public key.

9. The device according to claim 8, wherein said interface is based on a wired or wireless data communication interface interconnecting said at least one hardware module with said processing device.

10. The device according to claim 8, wherein said component for decrypting also allows for employing said public key encryption method, involving:
- a first secret key which is only known to license key distribution authorities, wherein said first public key corresponding to said first secret key,
wherein said first secret key is used for encrypting said hardware identification sequence and wherein said first public key is the only key which allows to decrypt data encrypted by said first secret key.

## Patentansprüche

1. Verfahren zum Verhindern einer unautorisierten Verwendung von Software, die auf mindestens ein spezifisches Hardwaremodul zugreift, das eine eindeutige Hardwareidentifikationssequenz umfasst, wobei die Software einen Lizenzschlüssel umfasst, um ausgeführt zu werden, wobei der Lizenzschlüssel vorbestimmte verschlüsselte Hardwareidentifikationsadressen umfasst,
wobei das Verfahren auf einer Vorrichtung ausgeführt wird, die mit einer ersten Bluetooth-Netzwerkschnittstelle (303) ausgestattet ist und mit dem Hardwaremodul drahtlos verbunden ist, das eine zweite Bluetooth-Netzwerkschnittstelle (405) ausweist, wobei jede Bluetooth-Netzwerkschnittstelle (303, 405) eine Hardwareidentifikationsadresse umfasst, die als die Hardwareidentifikationssequenz verwendet wird,
wobei das Verfahren umfasst:
- Auslesen der Hardwareidentifikationsadressen von beiden Bluetooth-Netzwerkschnittstellen (303, 405);
- Abrufen der verschlüsselten Hardwareidentifikationsadressen, die in dem Lizenzschlüssel enthalten sind;
- Entschlüsseln eines verschlüsselten ersten öffentlichen Schlüssels mit Hilfe eines zweiten öffentlichen Schlüssels;
- Entschlüsseln der verschlüsselten Hardwareidentifikationsadressen, die von dem Lizenzschlüssel abgerufen sind, mit Hilfe eines ersten öffentlichen Schlüssels, der Teil eines Verschlüsselungsverfahren mit öffentlichem Schlüssel ist;
- Vergleichen der ausgelesenen Hardwareidentifikationsadressen der Bluetooth-Netzwerkschnittstellen (303, 405) mit den entschlüsselten Hardwareidentifikationsadressen des Lizenzschlüssels; und
- Erlauben einer Ausführung der Software, wenn die entsprechenden Adressen übereinstimmen,
wobei der erste öffentliche Schlüssel mit Hilfe eines Verschlüsselungsverfahrens mit öffentlichem Schlüssel verschlüsselt ist, das einen zweiten geheimen Schlüssel, der nur einer vertrauenswürdigen dritten Autorität bekannt ist, und einen zweiten öffentlichen Schlüssel umfasst, der mit dem zweiten geheimen Schlüssel korrespondiert, wobei der verschlüsselte erste öffentliche Schlüssel mit Hilfe des zweiten geheimen Schlüssels verschlüsselt ist und der zweite öffentliche Schlüssel der einzige Schlüssel ist, der zum Entschlüsseln des verschlüsselten ersten öffentlichen Schlüssels anwendbar ist.

2. Verfahren gemäß Anspruch 1, wobei das Auslesen mit einer Schnittstelle zur Kommunikation über die Schnittstelle mit dem mindestens einen Hardwaremodul betreibbar ist.

3. Verfahren gemäß Anspruch 2, wobei das Auslesen mit einer Schnittstelle betreibbar ist, die auf einer drahtgebunden oder drahtlosen Datenkommunikationsschnittelle zum Verbinden des mindestens einen Hardwaremoduls mit einer verarbeitenden Vorrichtung basiert, die mit der Software betreibbar ist.

4. Verfahren gemäß einem der vorstehenden Ansprüche, **dadurch gekennzeichnet, dass** die Hardwareidentifikationssequenz, die in dem Lizenzschlüssel enthalten ist, durch Verwendung des Verschlüsselungsverfahren mit öffentlichem Schlüssel verschlüsselt ist, das umfasst:
- einen ersten geheimen Schlüssel, der nur einer Lizenzschlüssel-Distributionsautorität bekannt ist, wobei der erste öffentliche Schlüssel mit dem ersten geheimen Schlüssel korrespondiert;
wobei der erste geheime Schlüssel zum Verschlüsseln der Hardwareidentifikationssequenz verwendet wird und wobei der erste öffentliche Schlüssel der einzige Schlüssel ist, der ermöglicht, Daten zu entschlüsseln, die mit dem ersten geheimen Schlüssel verschlüsselt sind.

5. Verfahren gemäß einem der vorstehenden Ansprüche wobei mindestens einer von dem ersten öffentlichen Schlüssel und dem zweiten öffentlichen Schlüssel frei zugänglich ist.

6. Verfahren gemäß einem der vorstehenden Ansprüche, umfassend:
- Bereitstellen des Lizenzschlüssels, der Sequenzen, um das Softwareprogramm zu identifizieren, und/oder Sequenzen, um einen Hersteller oder Distributor des Softwareprogramms zu identifizieren, zusätzlich umfasst; und/oder
- Bereitstellen der Hardwareidentifikationssequenz des mindestens einen spezifischen Hardwaremoduls, dessen Hardwareidentifikationssequenz einen Hersteller des Hardwaremoduls identifiziert.

7. Computerprogramm zum Verhindern einer unautorisierten Verwendung von Software, das Programmcodeabschnitte umfasst, um die Operationen von einem der Ansprüche 1 bis 6 auszuführen, wenn das Programm auf einer verarbeitenden Vorrichtung, einem Computer, einer Benutzerendvorrichtung oder einer Netzwerkvorrichtung läuft.

8. Verarbeitende Vorrichtung zum Verhindern einer unautorisierten Verwendung von Software, wobei die Software auf mindestens ein spezifisches Hardwaremodul zugreift, das eine eindeutige Hardwareidentifikationssequenz umfasst, wobei die Software mit der verarbeitenden Vorrichtung betreibbar ist und einen Lizenzschlüssel umfasst, um ausgeführt zu werden, wobei der Lizenzschlüssel vorbestimmte verschlüsselte Hardwareidentifikationsadressen umfasst,
wobei die Vorrichtung umfasst:
- eine erste Bluetooth-Netzwerkschnittstelle (303), um die verarbeitende Vorrichtung und eine zweite Bluetooth-Netzwerkschnittstelle (405) miteinander drahtlos zu verbinden, wobei jede Bluetooth-Netzwerkschnittstelle (303, 405) eine Hardwareidentifikationsadresse umfasst, die als die Hardwareidentifikationssequenz verwendet wird;
- eine Komponente zum Auslesen der Hardwareidentifikationsadressen von beiden der Bluetooth-Netzwerkschnittstellen (303, 405);
- eine Komponente zum Abrufen der verschlüsselten Hardwareidentifikationsadressen, die in dem Lizenzschlüssel enthalten sind;
- eine Komponente zum Entschlüsseln eines verschlüsselten ersten öffentlichen Schlüssels mit Hilfe eines zweiten öffentlichen Schlüssels;
- eine Komponente zum Entschlüsseln der verschlüsselten Hardwareidentifikationsadressen, die von dem Lizenzschlüssel abgerufen sind, mit Hilfe eines ersten öffentlichen Schlüssels, der Teil eines Verschlüsselungsverfahren mit öffentlichem Schlüssel ist;
- eine Komponente zum Vergleichen der ausgelesenen Hardwareidentifikationsadressen der Bluetooth-Netzwerkschnittstellen (303, 405) mit den entschlüsselten Hardwareidentifikationsadressen des Lizenzschlüssels; und
- eine Komponente zum Erlauben einer Ausführung der Software, wenn die entsprechenden Adressen übereinstimmen,
wobei der erste öffentliche Schlüssel mit Hilfe eines Verschlüsselungsverfahrens mit öffentlichem Schlüssel verschlüsselt ist, das einen zweiten geheimen Schlüssel, der nur einer vertrauenswürdigen dritten Autorität bekannt ist, und einen zweiten öffentlichen Schlüssel umfasst, der mit dem zweiten geheimen Schlüssel korrespondiert, wobei der verschlüsselte erste öffentliche Schlüssel mit Hilfe des zweiten geheimen Schlüssels verschlüsselt ist und der zweite öffentliche Schlüssel der einzige Schlüssel ist, der zum Entschlüsseln des verschlüsselten ersten öffentlichen Schlüssels anwendbar ist.

9. Vorrichtung gemäß Anspruch 8, wobei die Schnittstelle auf einer drahtgebunden oder drahtlosen Datenkommunikationsschnittelle basiert, die das mindestens eine Hardwaremodul und die verarbeitende Vorrichtung miteinander verbindet.

10. Vorrichtung gemäß Anspruch 8, wobei die Komponente zum Entschlüsseln ebenso ermöglicht, das Verschlüsselungsverfahren mit öffentlichem Schlüssel zu verwenden, das einschließt:
- einen ersten geheimen Schlüssel, der nur einer Lizenzschlüssel-Distributionsautorität bekannt ist, wobei der erste öffentliche Schlüssel mit dem ersten geheimen Schlüssel korrespondiert;
wobei der erste geheime Schlüssel zum Verschlüsseln der Hardwareidentifikationssequenz verwendet wird und wobei der erste öffentliche Schlüssel der einzige Schlüssel ist, der ermöglicht, Daten zu enzschlüsseln, die mit dem ersten geheimen Schlüssel verschlüsselt sind.

## Revendications

1. Procédé pour empêcher l'utilisation non autorisée d'un logiciel accédant à au moins un module matériel spécifique comprenant une séquence d'identification de matériel unique, dans lequel ledit logiciel comprend une clé de licence pour être exécuté, dans lequel ladite clé de licence comprend des adresses d'identification de matériel cryptées prédéterminées,
dans lequel ledit procédé est effectué sur un dispositif muni d'une première interface de réseau Bluetooth (303) et connecté sans fil au dit module matériel ayant une deuxième interface de réseau Bluetooth (405), dans lequel chaque interface de réseau Bluetooth (303, 405) comprend une adresse d'identification de matériel étant utilisée en tant que ladite séquence d'identification de matériel,
ledit procédé comprenant les étapes consistant à :
- lire lesdites adresses d'identification de matériel desdites deux interfaces de réseau Bluetooth (303, 405),
- extraire lesdites adresses d'identification de matériel cryptées contenues dans ladite clé de licence,
- décrypter une première clé publique cryptée à l'aide d'une deuxième clé publique,
- décrypter lesdites adresses d'identification de matériel cryptées extraites de ladite clé de licence à l'aide d'une première clé publique faisant partie d'un procédé de cryptage de clé publique,
- comparer lesdites adresses d'identification de matériel lues desdites interfaces de réseau Bluetooth (303, 405) aux dites adresses d'identification de matériel décryptées de ladite clé de licence, et
- permettre l'exécution dudit logiciel si les adresses correspondantes correspondent,
dans lequel ladite première clé publique est cryptée à l'aide d'un procédé de cryptage de clé publique comprenant une deuxième clé secrète connue uniquement d'une troisième autorité digne de confiance et une deuxième clé publique correspondant à ladite deuxième clé secrète, dans lequel ladite première clé publique cryptée est cryptée à l'aide de ladite deuxième clé secrète et ladite deuxième clé publique est la seule clé applicable pour décrypter ladite première clé publique cryptée.

2. Procédé selon la revendication 1, dans lequel ladite lecture est utilisable avec une interface pour interfacer la communication avec ledit au moins un module matériel.

3. Procédé selon la revendication 2, dans lequel ladite lecture est utilisable avec une interface basée sur une interface de communication de données câblée ou sans fil pour interconnecter ledit au moins un module matériel avec un dispositif de traitement utilisable avec ledit logiciel.

4. Procédé selon l'une quelconque des revendications précédentes, **caractérisé en ce que** ladite séquence d'identification de matériel contenue dans ladite clé de licence est cryptée en employant ledit procédé de cryptage de clé publique, comprenant :
- une première clé secrète qui est uniquement connue des autorités de distribution de clé de licence, dans lequel ladite première clé publique correspond à ladite première clé secrète,
dans lequel ladite première clé secrète est utilisée pour crypter ladite séquence d'identification de matériel, et
dans lequel ladite première clé publique est la seule clé qui permette de décrypter les données cryptées par ladite première clé secrète.

5. Procédé selon l'une quelconque des revendications précédentes, dans lequel au moins l'une de la première clé publique et de la deuxième clé publique est librement accessible.

6. Procédé selon l'une quelconque des revendications précédentes, comprenant les étapes consistant à :
- fournir ladite clé de licence qui comprend en outre des séquences pour identifier le programme logiciel et/ou des séquences pour identifier un fabricant ou un distributeur du programme logiciel, et/ou
- fournir ladite séquence d'identification de matériel dudit au moins un module matériel spécifique, laquelle séquence d'identification de matériel identifie un fabricant du module matériel.

7. Programme informatique pour empêcher l'utilisation non autorisée d'un logiciel, comprenant une section de code de programme pour effectuer les opérations selon l'une quelconque des revendications 1 à 6, lorsque ledit programme est exécuté sur un dispositif de traitement, un ordinateur, un terminal d'utilisateur ou un dispositif de réseau.

8. Dispositif de traitement pour empêcher l'utilisation non autorisée d'un logiciel, dans lequel ledit logiciel accède à au moins un module matériel spécifique comprenant une séquence d'identification de matériel unique, dans lequel ledit logiciel est utilisable avec ledit dispositif de traitement et comprend une clé de licence pour être exécuté, ladite clé de licence comprenant des adresses d'identification de matériel cryptées prédéterminées,
ledit dispositif comprenant :
- une première interface de réseau Bluetooth (303) pour interconnecter sans fil ledit dispositif de traitement à une deuxième interface de réseau Bluetooth (405), dans lequel chaque interface de réseau Bluetooth (303, 405) comprend une adresse d'identification de matériel qui est utilisée en tant que ladite séquence d'identification de matériel,
- un composant pour lire lesdites adresses d'identification de matériel desdites deux interfaces de réseau Bluetooth (303,405),
- un composant pour extraire lesdites adresses d'identification de matériel cryptées contenues dans ladite clé de licence,
- un composant pour décrypter une première clé publique cryptée à l'aide d'une deuxième clé publique,
- un composant pour décrypter lesdites adresses d'identification de matériel extraites de ladite clé de licence à l'aide d'une première clé publique faisant partie d'un procédé de cryptage de clé publique,
- un composant pour comparer lesdites adresses d'identification de matériel lues desdites interfaces de réseau Bluetooth (303, 405) aux dites adresses d'identification de matériel décryptées de ladite clé de licence, et
- un composant pour permettre l'exécution dudit logiciel si les deux séquences correspondent,
dans lequel ladite première clé publique est cryptée à l'aide d'un procédé de cryptage de clé publique comprenant une deuxième clé secrète connue uniquement d'une troisième autorité digne de confiance et une deuxième clé publique correspondant à ladite deuxième clé secrète, dans lequel ladite première clé publique cryptée est cryptée à l'aide de ladite deuxième clé secrète et ladite deuxième clé publique est la seule clé applicable pour décrypter ladite première clé publique cryptée.

9. Dispositif selon la revendication 8, dans lequel ladite interface est basée sur une interface de communication de données câblée ou sans fil interconnectant ledit au moins un module matériel avec ledit dispositif de traitement.

10. Dispositif selon la revendication 8, dans lequel ledit composant de décryptage permet également d'employer ledit procédé de cryptage de clé publique, impliquant :
- une première clé secrète qui est uniquement connue des autorités de distribution de clé de licence, dans lequel ladite première clé publique correspond à ladite première clé secrète,
dans lequel ladite première clé secrète est utilisée pour crypter ladite séquence d'identification de matériel, et
dans lequel ladite première clé publique est la seule clé qui permette de décrypter les données cryptées par ladite première clé secrète.
